# EUROPEAN PATENT APPLICATION

(11) **EP 4 830 861 A1**
(43) Date of publication of application: **28.10.2026**
(21) Application number: 26165322.4
(22) Date of filing: 17.03.2026
(51) Int. Cl.: B23K 9/18, B23K 9/12, B23K 9/095

(54) **MULTI-ELECTRODE SUBMERGED ARC WELDING SYSTEM, AND MULTI-ELECTRODE SUBMERGED ARC WELDING METHOD**

(30) Priority: 25.04.2025 JP 2025073521; 16.06.2025 JP 2025100078
(71) Applicant: DAIHEN Corporation, Yodogawa-ku Osaka-shi Osaka 532-8512 (JP)
(72) Inventor: BABA, Hayato, Osaka-shi, Osaka 532-8512 (JP)
(74) Representative: Boult Wade Tennant LLP

(57) **Abstract**

A multi-electrode submerged arc welding system includes: a first electrode and a second electrode; a first welding power supply device that outputs a first output current to the first electrode, with the first output current being an alternating current corresponding to a first set current value; and a second welding power supply device that outputs a second output current to the second electrode, with the second output current being an alternating current corresponding to a second set current value. The first welding power supply device or the second welding power supply device is configured to output, in place of the first output current or the second output current, a current having a set frequency of less than 50 Hz, with the set frequency being set in accordance with the first set current value or a magnitude of the first output current.

## Description

### FIELD

The present disclosure relates to a multi-electrode submerged arc welding system for performing submerged arc welding, and to a multi-electrode submerged arc welding method.

### BACKGROUND

Submerged arc welding has been conventionally known. Submerged arc welding is performed by applying granular flux to a workpiece, feeding a welding wire into the flux, and generating an arc between the tip of the welding wire and the workpiece. Submerged arc welding enables efficient welding of thick plates by supplying a large current to a thick welding wire.

JP-A-2000-117442 discloses an example of a submerged arc welding device. The submerged arc welding device supplies flux stored in a hopper to a welding area via a nozzle (hose). The flux shields the area around the arc and stabilizes the arc. A part of the flux is melted by the arc heat and becomes molten slag. The molten slag covers the upper part of the molten metal and isolates it from the atmosphere, thereby protecting it from oxidation and the like.

In the vicinity of the arc generation area, gas mainly generated by melting of the flux is present between the molten metal and the molten slag. This space, namely a gas presence area under the molten slag, is called a cavity. The cavity is formed when the gas generated by melting of the flux is covered and trapped by the molten slag. When the internal pressure of the cavity increases, the molten slag cannot cover the entirety of the gas in the cavity. As a result, a hole is formed in a part of the molten slag, allowing the gas in the cavity to be discharged from the cavity to the outside, namely to the area above the molten slag. Although the existence of the cavity has been recognized in the academic field, the influence of the cavity on a welding result has not been clarified so far. However, experimental observations by the inventors have shown that the behavior of the cavity affects the behavior of the molten metal, thereby having an influence on the welding results such as bead appearance.

When the amount of gas generated by melting of the flux or the like is larger than the amount of gas discharged from the cavity, the cavity expands. On the other hand, when the amount of gas discharged is larger than the amount of gas generated, the cavity contracts. Excessive expansion and contraction of the cavity causes significant vibration of the molten metal, which results in poor bead appearance. Significant vibration of the molten metal leads to a change in the weld width of a base material, causing uneven bead widths and the occurrence of undercuts. This phenomenon can occur in any type of joint, but it is particularly pronounced in downhand or flat fillet welding, horizontal fillet welding, and welding within a groove. In addition, significant vibration of the molten metal causes ripples and waviness on the weld bead, which results in poor appearance. Further, when the cavity contracts excessively, both ends of the molten metal are pushed toward the center of the bead by the molten slag. This narrows the bead width. In some cases, the molten metal that vibrates significantly may entrain the gas and cause pore defects. In addition, when the molten slag vibrates significantly due to excessive expansion and contraction of the cavity, fine bubbles in the molten slag are discharged to the outside, resulting in an increase in the density of the molten slag. In this case, it is difficult to remove solidified slag (generally referred to simply as "slag"), which is formed after the molten slag is cooled and solidified. As described above, excessive expansion and contraction of the cavity causes various problems. For favorable welding performance, it is important to stabilize the cavity.

In order to suppress excessive expansion and contraction of the cavity, an amount of gas equal to the amount of gas generated may be periodically discharged from the cavity. The above can be achieved naturally without any special operation up to certain conditions involving current, heat input, welding speed, or weld cross-sectional area. Since stable welding can be achieved within this range of conditions, conventional submerged arc welding is applied within this range. However, when the current, heat input, welding speed, or weld cross-sectional area increases, the amount of gas discharged from the cavity cannot keep pace with the amount of gas generated. As a result, the cavity continues to expand to a large size. Ultimately, the molten slag can no longer confine the gas within the cavity, and a hole is formed in the molten slag. As a result, the gas inside the cavity is suddenly discharged to the outside, and the cavity rapidly contracts. When these behaviors are repeated and the cavity repeatedly undergoes excessive expansion and contraction, favorable welding results cannot be obtained. A similar problem also arises in multi-electrode submerged arc welding in which arcs are generated at a plurality of electrodes.

### SUMMARY

In view of the circumstances described above, an object of the present disclosure is to provide a multi-electrode submerged arc welding system and a multi-electrode submerged arc welding method that can increase a range of welding conditions under which favorable welding results can be obtained.

According to a first aspect of the present disclosure, there is provided a multi-electrode submerged arc welding system including: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value. The first welding power supply device or the second welding power supply device is configured to output, in place of the first output current or the second output current, a current having a set frequency of less than 50 Hz, the set frequency being set in accordance with the first set current value or a magnitude of the first output current.

Preferably, the set frequency may be set to at least 15 Hz and at most 30 Hz when the first set current value or the magnitude of the first output current is 800 A or greater, and may be set to at least 20 Hz and at most 40 Hz when the first set current value or the magnitude of the first output current is less than 800 A.

Preferably, the set frequency may be set in accordance with a weld cross-sectional area.

Preferably, the set frequency may vary in accordance with changes in a welding speed, an inter-electrode distance that is a separation distance between the first electrode and the second electrode, an inter-electrode phase difference that is an absolute value of a phase difference between the first output current and the second output current, a high current period ratio, and a trailing electrode angle.

Preferably, the set frequency may be set to a value F calculated based on the following formulas (1) to (3) in which A represents the weld cross-sectional area, S represents the welding speed, ED represents the inter-electrode distance, PD represents the inter-electrode phase difference, R represents the high current period ratio, D_{T} represents the trailing electrode angle, and K_{AA}, K_{SA}, K_{EA}, K_{PA}, K_{LA0}, K_{AB}, K_{SB}, K_{EB}, K_{PB}, K_{RB}, K_{LB0}, K_{DT}, and α represent a predetermined coefficient or a constant: ${L}_{A} = {K}_{AA} ⋅ A + {K}_{SA} ⋅ S + {K}_{EA} ⋅ ED + {K}_{PA} ⋅ PD + {K}_{LA 0} ,$ (1) ${L}_{B} = {K}_{AB} ⋅ A + {K}_{SB} ⋅ S + {K}_{EB} ⋅ ED + {K}_{PB} ⋅ PD + {K}_{RB} ⋅ R + {L}_{LB 0} ,$ (2) $F = MAX \left({L}_{A}, {L}_{B}\right) + {K}_{DT} ⋅ {D}_{T} + α .$ (3)

Preferably, the set frequency may be adjustable by operator manipulation.

According to a second aspect of the present disclosure, there is provided a multi-electrode submerged arc welding method for a multi-electrode submerged arc welding system that includes: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value. The multi-electrode submerged arc welding method includes: calculating a set frequency of less than 100 Hz in accordance with the first set current value or a magnitude of the first output current; and causing the first welding power supply device or the second welding power supply device to output, in place of the first output current or the second output current, a current having the set frequency.

According to a third aspect of the present disclosure, there is provided a multi-electrode submerged arc welding system including: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value. The first welding power supply device or the second welding power supply device is configured to output, in place of the first output current or the the second output current, a current having a set frequency of at least 15 Hz and at most 30 Hz, with the first set current value or a magnitude of the first output current being at least 800 A.

Preferably, in the third aspect, an inter-electrode phase difference, which is an absolute value of a phase difference between the first output current and the second output current, may be at least 135° and at most 180°.

Preferably, in the third aspect, the inter-electrode phase difference may be at least 140° and at most 165°.

Preferably, in the third aspect, a welding speed may be 45 cm/min or less.

Preferably, in the third aspect, the set frequency may be adjustable by operator manipulation.

According to a fourth aspect of the present disclosure, there is provided a multi-electrode submerged arc welding method for a multi-electrode submerged arc welding system that includes: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value. The multi-electrode submerged arc welding method includes: causing the first set current value or a magnitude of the first output current to be at least 800 A; causing an inter-electrode phase difference, which is an absolute value of a phase difference between the first output current and the second output current, to be at least 135° and at most 180°; and causing the first welding power supply device or the second welding power supply device to output, in place of the first output current or the second output current, a current having a set frequency of at least 15 Hz and at most 30 Hz.

According to a fifth aspect of the present disclosure, there is provided a multi-electrode submerged arc welding system including: a first electrode and a second electrode; a first welding power supply device that outputs a first output current to the first electrode, the first output current being a direct current corresponding to a first set current value; and a second welding power supply device that outputs a second output current to the second electrode, the second output current being a direct current corresponding to a second set current value. The first welding power supply device or the second welding power supply device is configured to output, in place of the first output current or the second output current, a current having a set frequency of less than 100 Hz, the set frequency being set in accordance with the first set current value or a magnitude of the first output current.

Preferably, in the fifth aspect, the set frequency may be adjustable by operator manipulation.

The first or second welding power supply device according to the present disclosure varies a current by using a set frequency of less than 50 Hz and outputs the current, where the set frequency is set according to one of the first set current value and a magnitude of the first output current. The current is varied with a low frequency that is set according to the current and outputted, thereby facilitating the discharge of the gas from the cavity. This suppresses excessive expansion and contraction of the cavity. Accordingly, the multi-electrode submerged arc welding system according to the present disclosure can increase the range of welding conditions under which favorable welding results can be obtained.

### DRAWINGS

Fig. 1 is a diagram for describing a welding system according to a first embodiment, where Fig. 1(a) is a block diagram showing the overall configuration of the welding system, and Fig. 1(b) is a block diagram showing the internal configurations of a welding power supply device and a control device.
Fig. 2 is a waveform diagram showing an example of the output current of the welding power supply device.
Fig. 3 shows a set of tables presenting the calculation results of set frequencies and the evaluation results of bead appearance.
Fig. 4 is a block diagram for describing a welding system according to a second embodiment, and shows the internal configurations of a welding power supply device and a control device.
Fig. 5 is a diagram for describing a welding system according to a third embodiment, where Fig. 5(a) is a block diagram showing the internal configurations of a welding power supply device and a control device, and Fig. 5(b) is a waveform diagram showing an example of the output current of the welding power supply device.
Fig. 6 is a block diagram for describing a welding system according to a fourth embodiment, and shows the internal configurations of a welding power supply device and a control device.
Fig. 7 is a block diagram for describing a welding system according to a fifth embodiment, and shows the internal configurations of a welding power supply device and a control device.
Fig. 8 is a block diagram for describing a welding system according to a sixth embodiment, and shows the internal configuration of the welding system.
Fig. 9 is a block diagram for describing a welding system according to a seventh embodiment, and shows the internal configuration of the welding system.
Fig. 10 is a block diagram for describing a welding system according to an eighth embodiment, and shows the internal configurations of a welding power supply device and a control device.
Fig. 11 shows a set of tables presenting the evaluation results of bead appearance when welding was performed under each set of conditions.

### EMBODIMENTS

The following describes preferred embodiments of the present disclosure in detail with reference to the accompanying drawings.

### First Embodiment:

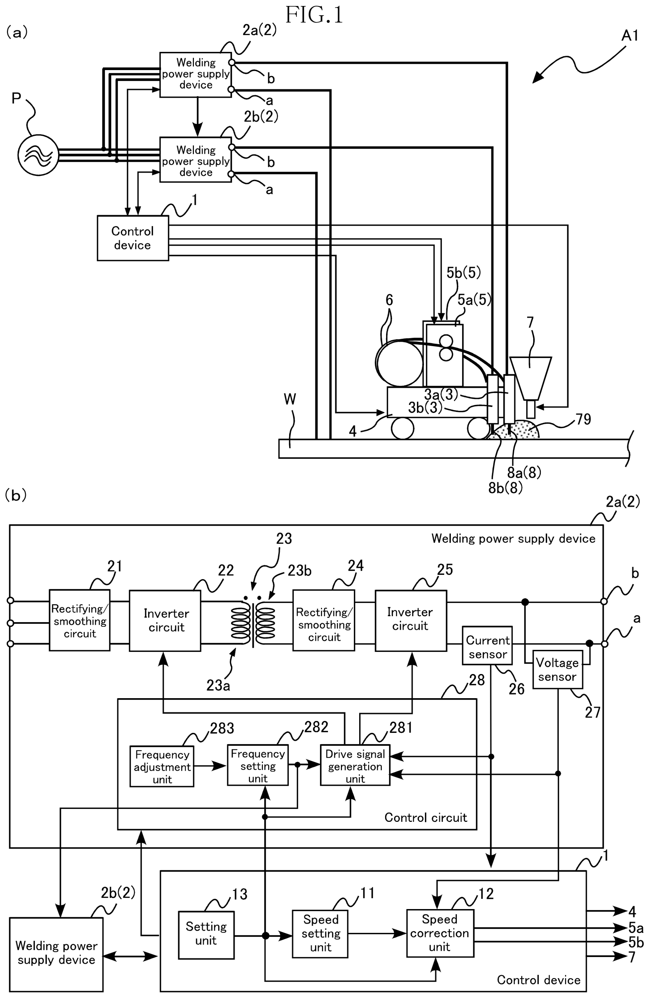

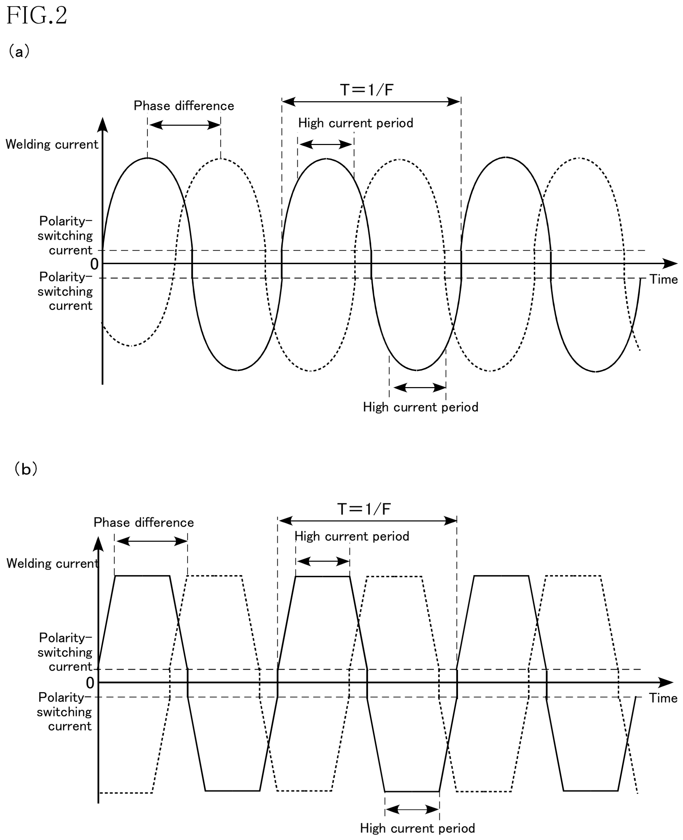

Figs. 1 and 2 are diagrams for describing a welding system A1 according to a first embodiment. Fig. 1(a) is a block diagram showing the overall configuration of the welding system A1. Fig. 1(b) is a block diagram showing the internal configurations of a welding power supply device 2 and a control device 1. Note that in Fig. 1(b), the internal configuration of a welding power supply device 2b is omitted. Fig. 2 is a waveform diagram showing an example of the output current of the welding power supply device 2. In each of Figs. 2(a) and 2(b), the solid line shows the waveform of the output current of a welding power supply device 2a, and the dashed line shows the waveform of the output current of a welding power supply device 2b.

The welding system A1 is a system for performing multi-electrode submerged arc welding. As shown in Fig. 1(a), the welding system A1 includes a control device 1, a carriage 4, and a flux application device 7, while also including a plurality of welding power supply devices 2, a plurality of welding torches 3, a plurality of wire feeders 5, a plurality of wire reels 6, and a plurality of electrodes 8. The welding system A1 moves the carriage 4 along a welding line of a workpiece W while applying granular flux 79 by using the flux application device 7 and feeding a welding wire into the flux 79 by using the wire feeders 5. The welding wire is supplied from the wire reels 6. The welding power supply devices 2 convert the AC power supplied from a commercial power supply P into power suitable for welding, and output the power thus converted. As a result, an arc is generated within the flux 79 between the electrodes 8, which are the tips of the welding wires, and the workpiece W. Welding is performed by the heat of the arc. As a result, welding is performed along the welding line of the workpiece W. The workpiece W may be moved, e.g., translated or turned, instead of using the carriage 4.

The welding torches 3 guide the welding wires fed by the wire feeders 5 to a welding location. The tip of the welding wire forms the electrode 8, which protrudes from the tip of the welding torch 3. The welding torches 3 each includes a contact tip (not illustrated), which is located at its tip and electrically connected to the welding power supply device 2. The welding power supply device 2 supplies welding current to the welding wire that is in contact with the contact tip. The welding torches 3 are fixed to the carriage 4, and move along with the movement of the carriage 4. The welding torches 3 may be fixed directly to the carriage 4 or indirectly to the carriage 4 via an arm or the like.

In the present embodiment, the welding system A1 includes two welding power supply devices 2, two welding torches 3, two wire feeders 5, two wire reels 6, and two electrodes 8. The welding system A1 performs so-called tandem welding. In this welding, the two electrodes 8 pass the same welding location with a time difference and generate respective arcs, thereby enabling highly efficient and high-speed welding. The two welding torches 3 are arranged in line in the traveling direction of the carriage 4. Thus, when the carriage 4 travels along the welding line of the workpiece W, one of the electrodes 8 passes a welding location first, and then the other electrode 8 passes the same welding location with a time delay. The electrodes 8 melt the workpiece W to form a single weld bead. Hereinafter, the leading electrode 8 that passes the welding location first may be referred to as an electrode 8a and the trailing electrode 8 that passes the welding location later may be referred to as an electrode 8b. Further, the wire feeder 5 that feeds the welding wire serving as the electrode 8a may be referred to as a wire feeder 5a, and the welding torch 3 that guides the welding wire may be referred to as a welding torch 3a. The wire feeder 5 that feeds the welding wire serving as the electrode 8b may be referred to as a wire feeder 5b, and the welding torch 3 that guides the welding wire may be referred to as a welding torch 3b. The welding power supply device 2 that supplies power to the electrode 8a may be referred to as a welding power supply device 2a, and the welding power supply device 2 that supplies power to the electrode 8b may be referred to as a welding power supply device 2b.

The control device 1 performs various controls for the welding system A1. The control device 1 may be a general-purpose computer installed with a program that performs various controls for the welding system A1, or may be a dedicated device for the control of the welding system A1. The control device 1 causes the carriage 4 to move at a predetermined travel speed. The travel speed is set based on the material and thickness of the workpiece W, for example. The control device 1 instructs the flux application device 7 to start and end application of the flux 79. The start and end of application of the flux 79 by the flux application device 7 may be performed manually. The control device 1 instructs the welding power supply device 2 to output power.

The control device 1 instructs the wire feeders 5a, 5b to start and end feeding of the welding wire and to set the feed speed of the welding wire. In the present embodiment, the control device 1 performs variable-speed wire feed control by adjusting the feed speed of the welding wire to feedback-control the output voltage of the welding power supply devices 2.

As shown in Fig. 1(b), the control device 1 includes a speed setting unit 11, a speed correction unit 12, and a setting unit 13. Although the control device 1 includes other elements for various controls, illustrations and descriptions thereof are omitted. The setting unit 13 sets information such as welding conditions according to an operation performed by a human operator on an operation unit (not illustrated) in the control device 1. The setting unit 13 sets welding conditions for each of the welding power supply devices 2a and 2b. Information such as welding conditions set by the setting unit 13 is used for various controls in the control device 1. In addition, part of information such as welding conditions set by the setting unit 13 is outputted to the welding power supply devices 2a, 2b and used for various controls in the welding power supply devices 2a, 2b. Note that a part or the entirety of the setting unit 13 may be arranged in the welding power supply devices 2a, 2b.

The speed setting unit 11 and the speed correction unit 12 are configured to perform variable-speed wire feed control.

The speed setting unit 11 is configured to set reference speeds, which are standard wire feed speeds corresponding to welding conditions. The speed setting unit 11 stores reference speeds corresponding to set voltage values, and outputs, to the speed correction unit 12, a reference speed corresponding to a set voltage value inputted from the setting unit 13. The reference speeds are not particularly limited, but may be 10 m/min or less, for example.

The speed correction unit 12 is configured to calculate a set speed by applying a correction to the reference speed inputted from the speed setting unit 11 and set the set speed on the wire feeder 5. The correction of the reference speed may be performed in the following manner. The speed correction unit 12 calculates a voltage effective value (RMS value) of the voltage outputted from the welding power supply device 2. Specifically, the voltage sensor 27 (described below) detects the output voltage of the welding power supply device 2 and outputs a voltage detection signal corresponding to the detected output voltage. The speed correction unit 12 receives the voltage detection signal and calculates the voltage effective value based on the received signal. Then, the speed correction unit 12 calculates the deviation between the voltage effective value and the set voltage value (or the deviation of the voltage effective value from the set voltage value), and performs a predetermined operation (by using integral control, for example) on the calculated deviation, to calculate an operation value (deviation operation value). Finally, the speed correction unit 12 calculates a set speed by adding the deviation operation value to the reference speed inputted from the speed setting unit 11. It should be noted that when the voltage effective value is smaller than the set voltage value (inputted by the human operator), the deviation is a negative value, and thus the above operation value is negative. Accordingly, the set speed to be set on the wire feeder 5 is smaller (slower) than the reference speed, causing the feed speed of the welding wire to decrease. Thus, the arc length increases, and the welding voltage also increases. On the other hand, when the voltage effective value is larger than the set voltage value, the speed correction unit 12 adds a positive operation value (corresponding to the positive deviation) to the reference speed, and sets a set speed larger (faster) than the reference speed on the wire feeder 5. This causes an increase in the feed speed of the welding wire, a decrease in the arc length, and a decrease in the welding voltage. According to the present disclosure, the set speed may be 10 m/min or less, for example. The speed correction unit 12 sets a set speed for each of the wire feeders 5a and 5b.

As described above, the control device 1 controls the output voltage (the voltage effective value) of the welding power supply devices 2a, 2b to the respective set voltage values by adjusting the feed speed of the welding wire. Note that the internal configuration of the control device 1 is not limited to what has been described above. It suffices for the control device 1 to control the output voltage (the voltage effective value) of the welding power supply devices 2 to the set voltage values by adjusting the feed speeds of the welding wires.

The welding power supply devices 2 convert the AC power supplied from the commercial power supply P into desired power, and output the converted desired power. As shown in Fig. 1(a), the welding power supply device 2a supplies power to the welding torch 3a (the electrode 8a), and the welding power supply device 2b supplies power to the welding torch 3b (the electrode 8b). As shown in Fig. 1(b), the welding power supply device 2a includes a rectifying/smoothing circuit 21, an inverter circuit 22, a transformer 23, a rectifying/smoothing circuit 24, an inverter circuit 25, a current sensor 26, a voltage sensor 27, and a control circuit 28. The welding power supply device 2b is similar to the welding power supply device 2a except that the control circuit 28 does not include a frequency setting unit 282 or a frequency adjustment unit 283, which is described below.

The rectifying/smoothing circuit 21 converts the AC power inputted from the commercial power supply P into DC power, and outputs the DC power. The inverter circuit 22 converts the DC power inputted from the rectifying/smoothing circuit 21 into high-frequency power by switching its switching elements in accordance with an output control drive signal inputted from the control circuit 28, and outputs the high-frequency power. The transformer 23 transforms the voltage of the high-frequency power outputted from the inverter circuit 22, and outputs the high-frequency power to the rectifying/smoothing circuit 24.

The rectifying/smoothing circuit 24 converts the high-frequency power inputted from the transformer 23 into DC power, and outputs the DC power. The inverter circuit 25 converts the DC power inputted from the rectifying/smoothing circuit 24 into AC power by switching the polarity between an electrode positive polarity and an electrode negative polarity according to a polarity-switching drive signal inputted from the control circuit 28, and outputs the AC power.

The current sensor 26 detects the output current of the welding power supply device 2. In the present embodiment, the current sensor 26 is disposed on the connection line connecting one of the output terminals of the inverter circuit 25 and an output terminal a. The output current of the welding power supply device 2 detected by the current sensor 26 is approximately equal to the current flowing through the electrode 8. The current sensor 26 outputs a current detection signal corresponding to the instantaneous value of a detected current to the control circuit 28 and the control device 1. Note that the position of the current sensor 26 is not limited. The voltage sensor 27 detects the output voltage of the welding power supply device 2. In the present embodiment, the voltage sensor 27 detects the voltage between the output terminal a and an output terminal b. The voltage is approximately equal to the voltage applied between the workpiece W and the tip of the electrode 8. The voltage sensor 27 outputs a voltage detection signal corresponding to the instantaneous value of a detected voltage to the control circuit 28 and the control device 1. Note that the voltage sensor 27 may detect the voltage between a lead wire attached to the welding torch 3 and a lead wire attached to the workpiece W.

The control circuit 28 is provided to control the welding power supply device 2, and may be implemented by a microcomputer, for example. The control circuit 28 receives the current detection signal from the current sensor 26, the voltage detection signal from the voltage sensor 27, and various command signals and various set values from the control device 1. Then, the control circuit 28 outputs the output control drive signal to the inverter circuit 22, and outputs the polarity-switching drive signal to the inverter circuit 25.

Upon receiving, from the control device 1, a command signal instructing the start of power output, the control circuit 28 starts outputting a drive signal to each of the inverter circuit 22 and the inverter circuit 25 to thereby start power output. Upon receiving, from the control device 1, a command signal instructing the stop of power output, the control circuit 28 stops outputting a drive signal to thereby stop power output. The control circuit 28 includes a drive signal generation unit 281, a frequency setting unit 282, and a frequency adjustment unit 283.

The frequency setting unit 282 is configured to set a set frequency F, which is the frequency of the alternating current outputted by the welding power supply device 2. The frequency setting unit 282 sets the set frequency F based on the information inputted from the control device 1 (the setting unit 13).

As described above, in the submerged arc welding, a cavity is formed between the molten metal and the molten slag covering the upper part of the molten metal. Excessive expansion and contraction of the cavity causes various problems. In the present embodiment, the waveform of the current outputted by the welding power supply device 2 is controlled to facilitate periodic gas discharge from the cavity, thereby suppressing excessive expansion and contraction of the cavity.

The amount of gas generated in the cavity has a positive correlation with heat input. Further, heat input has a positive correlation with output current. In the present embodiment, the welding power supply device 2 is configured to periodically increase and decrease the output current to adjust the amount of gas generated, thereby controlling expansion and contraction of the cavity. Specifically, if the output current is constant, the cavity may simply continue to expand to a certain large size. On the other hand, when a high current (higher than the constant current) is applied, the expansion rate of the cavity increases. As a result, before the cavity can expand to a large size without breaking, a hole is formed in the molten slag, allowing the gas to be discharged from the cavity. After the application of the high current, a low current (lower than the constant current) is applied to cause the cavity to contract. In this manner, while a desired effective current or average current is maintained, it is possible to facilitate periodic gas discharge from the cavity and suppress excessive expansion of the cavity by periodically increasing and decreasing the applied current. In the present embodiment, a method using an AC waveform is adopted for increasing and decreasing a current. With the AC waveform, the magnitude of the absolute value of the current can be considered as having a positive correlation with the magnitude of the volume of a cavity. In an AC waveform, a period in which the absolute values of the current become relatively small and another period (such as a peak period described below) in which the absolute values of the current become relatively large occur periodically for polarity switching. This can be utilized to stabilize the cavity.

However, if the period of current variation is too short, the gas cannot be sufficiently discharged from the cavity during each period, resulting in a poor cavity stabilization effect. At an AC frequency of 50 Hz or 60 Hz, which is the commercial AC frequency, it is difficult to sufficiently stabilize the cavity when the current increases. In the present embodiment, an AC frequency of less than 50 Hz is set to extend the duration of each of the high current period and the low current period, thereby facilitating discharge of the gas from the cavity. On the other hand, if the duration of each of the high current period and the low current period is too long, the amount of gas discharged from the cavity becomes excessive, causing problems such as a narrow bead width. When the high current period continues for a long time, the molten metal is subjected to a large arc force for a long time, resulting in ripples on the molten metal. In view of all the above, the AC frequency needs to be controlled appropriately according to the welding conditions. In submerged arc welding, the behaviors of the molten metal, the arc, the molten slag, and the cavity cannot be visually observed. Thus, it is extremely difficult to determine an appropriate AC frequency. Further, in order to adjust the AC frequency appropriately based on the effects of the AC frequency on a welding result, an appropriate amount of experimental data may need to be accumulated, and it is difficult for an operator to properly adjust the welding frequency only by his/her own judgment. In light of these issues, according to the present disclosure, desired data are obtained in advance by evaluating the bead appearance under various welding conditions. Further, based on thus obtained data, appropriate AC frequencies corresponding to the welding conditions are calculated in advance. By using such pre-calculated frequencies, the setting of appropriate frequencies is performed automatically in the welding system A1.

Specifically, the frequency setting unit 282 calculates the set frequency F, based on the following formulas (4) to (6), by using a weld cross-sectional area A, a welding speed S (travel speed of the carriage 4), an inter-electrode distance ED, an inter-electrode phase difference PD, a high current period ratio R, and a trailing electrode angle D_{T} that are inputted from the control device 1 (the setting unit 13). The weld cross-sectional area A is the area of the weld metal in a cross section perpendicular to the welding travel direction of the welding area, and is calculated by dividing the volume of the weld metal per unit time (= the cross-sectional area of the welding wire multiplied by the wire feed speed) by the welding speed S. In the present embodiment, the weld cross-sectional area A depends on the weld metal deposited by both the electrodes 8a and 8b. Thus, the volume of the weld metal per unit time is defined as a sum of a value obtained by multiplying the cross-sectional area of the welding wire serving as the electrode 8a by the wire feed speed of the wire feeder 5a and another value obtained by multiplying the cross-sectional area of the welding wire serving as the electrode 8b by the wire feed speed of the wire feeder 5b. Generally, in submerged arc welding, the wire feed speed cannot be obtained in advance because variable-speed wire feed control is performed. In this case, for the wire feed speed, use may be made of a measured wire feed speed obtained by performing welding in advance under the same conditions, or an estimated wire feed speed obtained by estimation based on the welding conditions. Alternatively, the wire feed speed may be sequentially measured actual feed speeds during the welding. In this case, the weld cross-sectional area A will change according to the change in the wire feed speed, and therefore the set frequency F may also change. The wire feed speed has a positive correlation with a set current value. Thus, the weld cross-sectional area A also has a positive correlation with the set current value. In other words, the weld cross-sectional area A changes according to the set current value. Thus, it can be said that the set frequency F, which is set according to the weld cross-sectional area A, is also set according to the set current value. Note that the magnitude (an effective value or an average of absolute values) of the output current of each welding power supply device 2 is controlled by a set current value. Thus, it can also be said that the set frequency F is set according to the magnitude of the output current. The inter-electrode distance ED is the separation distance between the electrode 8a and the electrode 8b. The inter-electrode phase difference PD is the absolute value (0°-180°) of the difference between the phase of the output current waveform of the welding power supply device 2a and the phase of the output current waveform of the welding power supply device 2b. The trailing electrode angle D_{T} is the inclination angle of the electrode 8b with respect to the vertical direction. The trailing electrode angle D_{T} takes a positive value when the angle is a forward angle and a negative value when the angle is a backward angle. The high current period ratio R is the ratio of the high current period(s), during which a high current(s) is conducted, to one cycle of the current waveform. The calculation of the high current period ratio R is performed based on the current waveform being set by the setting unit 13. When the current waveform is a trapezoidal wave, the high current period ratio R corresponds to the proportion of the periods of the constant high currents (positive and negative) in one cycle (see Fig. 2(b)). When the current waveform is different from a trapezoidal wave, it may be approximated with an appropriately similar trapezoidal wave, and the high current period ratio R of this trapezoidal wave may be applied as the high current period ratio R of the non-trapezoidal current waveform. For example, when the current waveform is a sinusoidal wave (see Fig. 2(a)) having two (i.e., positive and negative) high current periods corresponding to those of the approximating trapezoidal wave, the high current period ratio R for the sinusoidal wave is 0.4, for example. Further, with the sinusoidal waveform, the current values during the high current period (of the positive side, for example) may be greater than the effective value (RMS current). In an instance, the current values during the high current period may be greater than 0.8 (more precisely, about 0.81) multiplied by the maximum value of the sinusoidal current. In most cases, the welding power supply device 2a and the welding power supply device 2b share a common output current waveform. In this case, the high current period ratio R is the same whether the high current period ratio set for the welding power supply device 2a is used or the high current period ratio set for the welding power supply device 2b is used. On the other hand, if the high current period ratio set for the welding power supply device 2a is different from the high current period ratio set for the welding power supply device 2b, either the high current period ratio set for the welding power supply device 2a or the high current period ratio set for the welding power supply device 2b may be used. Alternatively, an average value of the high current period ratio set for the welding power supply device 2a and the high current period ratio set for the welding power supply device 2b may be used. K_{AA}, K_{SA}, K_{EA}, K_{PA}, K_{LA0}, K_{AB}, K_{SB}, K_{EB}, K_{PB}, K_{RB}, K_{LB0}, K_{DT}, and α are predetermined coefficients or constants. α is a value of zero or greater. ${L}_{A} = {K}_{AA} ⋅ A + {K}_{SA} ⋅ S + {K}_{EA} ⋅ ED + {K}_{PA} ⋅ PD + {K}_{LA 0}$ (4) ${L}_{B} = {K}_{AB} ⋅ A + {K}_{SB} ⋅ S + {K}_{EB} ⋅ ED + {K}_{PB} ⋅ PD + {K}_{RB} ⋅ R + {L}_{LB 0}$ (5) $F = MAX \left({L}_{A}, {L}_{B}\right) + {K}_{DT} ⋅ {D}_{T} + α$ (6)

The above formula (4) is for calculating a low frequency limit L_{A}. The low frequency limit L_{A} is the lower limit value of a frequency that can suppress deterioration of bead appearance. When the frequency of the output current of the welding power supply device 2 is smaller than the low frequency limit L_{A}, the high current period continues for a long time. As a result, the molten metal vibrates, causing the bead appearance to deteriorate. The above formula (5) is for calculating a low frequency limit L_{B}. The low frequency limit L_{B} is the lower limit value of a frequency that can suppress narrowing of the bead width. When the frequency of the output current of the welding power supply device 2 is smaller than the low frequency limit L_{B}, the amount of gas discharged from the cavity becomes excessive, causing the bead width to narrow.

The above formula (6) is for calculating the set frequency F. MAX() indicates a MAX function for outputting the maximum value among the values inputted in the parentheses (). A constant α is a shift amount for adjusting the set frequency F to an appropriate frequency. The K_{DT}·D_{T} term is used to reflect the effect of a trailing electrode angle. In the above formula (6), the set frequency F is calculated by adding the constant α to the larger one of the low frequency limit L_{A} and the low frequency limit L_{B} to apply a shift, and reflecting the effect of the trailing electrode angle. It may be desirable for the set frequency F to be as high as possible within the range where the cavity is stabilized. This is because shortening the duration of a low current state mitigates a decrease in arc rigidity and suppresses arc interruption and magnetic blow. The appropriate set frequency F is calculated by adding the constant α to the lower limit value of a frequency that can suppress deterioration of the bead appearance and can also suppress narrowing of the bead width.

The constant α preferably has a value of at least 0 Hz and at most 30 Hz. When the constant α is less than 0 Hz, vibration of the molten metal occurs due to prolonged continuation of the high current period, and narrowing of the bead width occurs due to excessive discharge of the gas from the cavity. On the other hand, when the constant α is greater than 30 Hz, discharge of the gas from the cavity becomes insufficient, and stabilization of the cavity may often be impossible. As the current, the heat input, the weld speed, and the weld cross-sectional area increase, the range of appropriate frequencies that yield a favorable bead appearance becomes narrower. Under such conditions, when the range of the constant α is wide, an estimated appropriate frequency may fall outside the actual range of appropriate frequencies. Setting the constant α within the above range enables accurate estimation of the appropriate frequency even under the above conditions. The constant α preferably has a value of at least 0 Hz and at most 5 Hz. In the present embodiment, the constant α is set to the most appropriate value of 2.5 Hz. Note that the value of the constant α is not limited to the above range.

In the present embodiment, when the set frequency F calculated with the above formula (6) is less than 10 Hz, the set frequency F is set to 10 Hz. When the set frequency F is less than 10 Hz, the duration of the low current period becomes long, causing the rigidity of the arc to decrease and making magnetic blow more likely to occur. However, in the environment where the risk of occurrence of magnetic blow is low, stable welding is possible even when the set frequency F is around 5 Hz. Thus, the lower limit of the set frequency F may be set to a smaller value.

The inter-electrode phase difference PD is preferably at least 120° and at most 180°. When it falls below 120°, the range of appropriate frequencies becomes narrower. This is thought to be due to the strong mutual attraction between the arcs of the electrodes 8. The inter-electrode distance ED is preset to an initial value in a commonly used range of 15-25 mm. When the inter-electrode distance ED is changed from the initial value, a desired value is inputted by an operator. Similarly, the trailing electrode angle D_{T} is preset to an initial value of a commonly used range of 5-15°. When the trailing electrode angle D_{T} is changed from the initial value, a desired value is inputted by an operator.

The coefficients K_{AA}, K_{SA}, K_{EA}, K_{PA}, K_{AB}, K_{SB}, K_{EB}, K_{PB}, K_{RB}, K_{DT}, and the constants K_{LA0}, K_{LB0} are calculated by performing multiple regression analysis by using the actual welding results under respective conditions. The coefficients and the constants were calculated based on the data when the workpiece W was a steel material, the welding wire was JIS Z 3351 YS-S6, the flux was JIS Z 3352 SFMS1, and the welding joint was a downhand fillet welding joint. For the materials and joint, the low frequency limits can be calculated with an accuracy of approximately ±3 Hz with the coefficients obtained by this calculation. When the materials or the joint is changed, it is possible to use the same coefficients or recalculate the coefficients depending on the new materials or the new joint.

The frequency adjustment unit 283 is configured to make fine adjustments to the set frequency F set by the frequency setting unit 282. The frequency adjustment unit 283 makes fine adjustments to the set frequency F according to an operation performed by an operator on the operation unit (not illustrated) of the welding power supply device 2. This allows the operator to check the welding results and make fine adjustments to the set frequency F.

The drive signal generation unit 281 is configured to generate the output control drive signal for the inverter circuit 22 and the polarity-switching drive signal for the inverter circuit 25. The drive signal generation unit 281 calculates a current effective value from the current detection signal inputted from the current sensor 26, and calculates a modulated amplitude by performing modulation control based on the error amplification value between the current effective value and the set current value I. As a result, the amplitude of the output current changes such that the current effective value equals the set current value I. The drive signal generation unit 281 sets a target waveform based on the calculated amplitude, the information on the output waveform inputted from the setting unit 13, and the set frequency F inputted from the frequency setting unit 282. For example, when the output waveform is set to a sinusoidal waveform, a half-cycle of the sinusoidal wave is set to the target waveform. The drive signal generation unit 281 generates the output control drive signal such that the absolute value of the current detection signal inputted from the current sensor 26 follows the target waveform, and outputs the output control drive signal to the inverter circuit 22. The drive signal generation unit 281 also generates the polarity-switching drive signal according to the switching between the positive polarity period and the negative polarity period that correspond to the set frequency F, and outputs the polarity-switching drive signal to the inverter circuit 25.

The control circuit 28 of the welding power supply device 2b does not include the frequency setting unit 282 or the frequency adjustment unit 283, and the drive signal generation unit 281 of the control circuit 28 of the welding power supply device 2b receives the set frequency F set by the frequency setting unit 282 of the welding power supply device 2a. Note that as with the control circuit 28 of the welding power supply device 2a, the control circuit 28 of the welding power supply device 2b may include a frequency setting unit 282 and a frequency adjustment unit 283.

The inverter circuit 22 switches its switching elements according to the output control drive signal and the inverter circuit 25 switches the polarity by switching its switching elements according to the polarity-switching drive signal. Thus, the welding power supply device(s) 2 outputs an AC current that varies in a set waveform according to the set current value I and the set frequency F.

It is desirable that the AC waveform be a trapezoidal wave or a sinusoidal wave. As used herein, the trapezoidal wave refers to a waveform, as shown in Fig. 2(b), where the current (the absolute value) rises linearly from a polarity switching current to a peak current (upslope), the peak current is maintained, and then the current (the absolute value) linearly decreases from the peak current to the polarity switching current (downslope). Thereafter, polarity switching is performed, and the sequence above is repeated in the opposite polarity. The polarity switching current is approximately 0 to 400 A, and may be 200 A in one example. As shown in Fig. 2(a), the sinusoidal waveform is a current waveform in which the current between polarity switching currents varies in a sinusoidal (half-cycle) shape. The sinusoidal waveform is similar to a waveform in which, within an AC half-cycle, the upslope time and downslope time are each set to 0.3 times the AC half-cycle, i.e., the high current period ratio R = 0.4. The AC waveform is more preferably a trapezoidal wave in the range of 0.4 ≤ R ≤ 0.6 or a sinusoidal wave. In a trapezoidal wave, when the high current period ratio R exceeds 0.6, the duration of a low current state is shortened, and the difference in current between a low current state and a high current state becomes small. As a result, the effect of discharging gas from the cavity becomes small, making it difficult to stabilize the cavity. On the other hand, when the high current period ratio R is less than 0.4, the peak current becomes high. This can cause the welding power supply to be unable to output the peak current, impose greater restrictions on the secondary-side environment that is capable of outputting the peak current, or reduce the upper limit of the set current value I that ensures an intended output current. For these reasons, a high current period ratio R of less than 0.4 is undesirable.

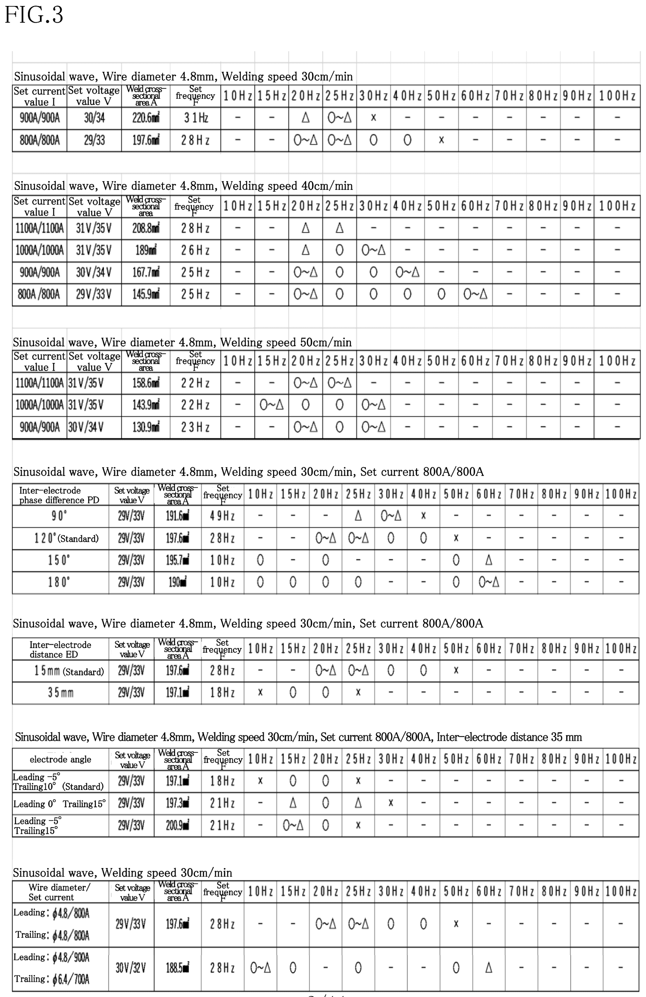

Fig. 3 shows a set of tables presenting the calculation results of set frequencies F and the evaluation results of bead appearance when α = 2.5. Unless otherwise specified in the tables, the inter-electrode distance ED is 15 mm, the inter-electrode phase difference PD is 120°, the electrode angle is -5° for the leading electrode and 10° for the trailing electrode (D_{T}). The set current value I and the set voltage value V are shown in the order of leading electrode/trailing electrode. In the tables shown in Fig. 3, the results of actually performing welding under the corresponding conditions and evaluating the bead appearance are indicated by "∘", "∘-△", "△", and "×". "∘" indicates conditions where the bead appearance is satisfactory. "∘-△" indicates conditions where there are no localized bead irregularities but the bead width gradually varies to result in unevenness. "△" indicates conditions where the bead width is uneven, and "×" indicates conditions where a welding defect such as an undercut has occurred. Note that "-" indicates conditions where no evaluation was performed because the result can be inferred from the preceding or succeeding evaluation results. Note that a high current period ratio R of "0.4" is set for a sinusoidal wave. As shown in Fig. 3, even when the set current value I is 800 A to 1000 A, the bead appearance is often improved with the use of the calculated set frequency F. In other words, using the set frequency F calculated with the above formulas (3) to (6) can increase the range of welding conditions under which favorable welding results can be obtained.

The following describes the operation and advantages of the welding system A1 according to the present embodiment.

According to the present embodiment, the frequency setting unit 282 calculates a set frequency F of less than 50 Hz, based on the weld cross-sectional area A inputted from the control device 1 (the setting unit 13). The weld cross-sectional area A is calculated by multiplying, for each electrode 8, the cross-sectional area of the corresponding welding wire by the corresponding wire feed speed, summing the resulting products, and dividing the sum by the welding speed S. The wire feed speed has a positive correlation with a set current value. Thus, the set frequency F to be set in accordance with the weld cross-sectional area A is to be set in accordance with the set current value. The welding power supply device 2 varies the current by using the set frequency F and outputs the current. At an AC frequency of 50 Hz or 60 Hz, which is the commercial AC frequency, it is difficult to sufficiently stabilize the cavity when the current increases. On the other hand, in the present embodiment, the current is varied with a set frequency F lower than the commercial AC frequency and outputted, thereby facilitating the discharge of the gas from the cavity. This suppresses excessive expansion and contraction of the cavity. Accordingly, the welding system A1 can increase the range of welding conditions under which favorable welding results can be obtained.

According to the present embodiment, the frequency setting unit 282 calculates the set frequency F, based on the above formulas (4) to (6), by using the weld cross-sectional area A, the welding speed S, the inter-electrode distance ED, the inter-electrode phase difference PD, the high current period ratio R, and the trailing electrode angle D_{T} that are inputted from the control device 1 (the setting unit 13). This allows the frequency setting unit 282 to set a more appropriate set frequency F, thus making it possible for the welding system A1 to further increase the range of welding conditions under which favorable welding results can be obtained. For example, under the condition of an AC frequency of 60 Hz, the maximum weld speed in the range of welding conditions under which favorable bead appearance can be obtained was approximately 431 g/min and the maximum weld cross-sectional area was approximately 91 mm². On the other hand, when the set frequency F calculated based on the above formulas (4) to (6) was used, the maximum weld speed was improved to at least 600 g/min (e.g., 657 g/min) and the maximum weld cross-sectional area to at least 200 mm² (e.g., 220 mm²).

According to the present embodiment, the frequency adjustment unit 283 makes fine adjustments to the set frequency F according to an operation performed by an operator on the operation unit of the welding power supply device 2. This allows the operator to check the welding results and make fine adjustments to the set frequency F.

In the present embodiment, the frequency setting unit 282 calculates the set frequency F by using the weld cross-sectional area A, the welding speed S, the inter-electrode distance ED, the inter-electrode phase difference PD, the high current period ratio R, and the trailing electrode angle D_{T}. However, the present disclosure is not limited to this. The frequency setting unit 282 may calculate the set frequency F by additionally using a parameter other than the weld cross-sectional area A, the welding speed S, the inter-electrode distance ED, the inter-electrode phase difference PD, the high current period ratio R, and the trailing electrode angle D_{T}. Alternatively, the frequency setting unit 282 may calculate the set frequency F by using the weld cross-sectional area A and either the welding speed S, the inter-electrode distance ED, the inter-electrode phase difference PD, the high current period ratio R, or the trailing electrode angle D_{T}. In this case, the set frequency F can be calculated more easily. Further, the frequency setting unit 282 may set the set frequency F by using a simpler method. For example, the frequency setting unit 282 may set the set frequency F to at least 15 Hz and at most 30 Hz when the set current value I is 800 A or greater, and may set the set frequency F to at least 20 Hz and at most 40 Hz when the set current value I is less than 800 A. The set current value I referred to in this case may be the set current value of the welding power supply device 2a, or may be the set current value of the welding power supply device 2b. Alternatively, the set current value I may be an average of the set current value of the welding power supply device 2a and the set current value of the welding power supply device 2b. In another alternative, the frequency setting unit 282 may refer to the magnitude (an effective value or an average of absolute values) of the output current of the welding power supply device 2a, or may refer to the magnitude of the output current of the welding power supply device 2b, instead of the set current value I. In yet another alternative, the frequency setting unit 282 may refer to an average of the magnitude of the output current of the welding power supply device 2a and the magnitude of the output current of the welding power supply device 2b. Even in these cases, the cavity can be stabilized and the bead appearance can be improved in a wide range of conditions. This allows the set frequency F to be set more easily.

### Second Embodiment:

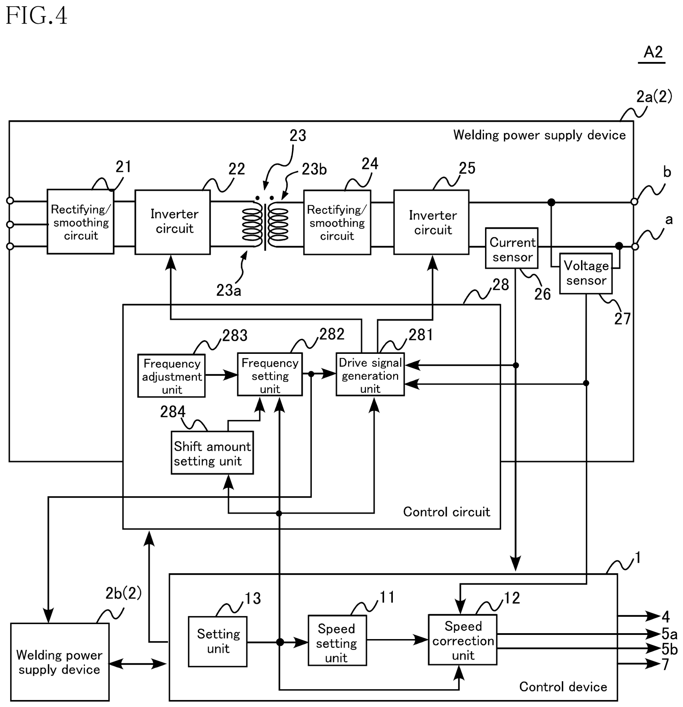

Fig. 4 is a diagram for describing a welding system A2 according to a second embodiment. Fig. 4 is a block diagram showing the internal configurations of a welding power supply device 2 and a control device 1 in the welding system A2. Note that in Fig. 4, the internal configuration of a welding power supply device 2b is omitted. In Fig. 4, elements that are the same as or similar to those in the first embodiment are denoted by the same reference numerals. The welding system A2 according to the present embodiment is different from the welding system A1 according to the first embodiment in setting the constant α, which is a shift amount, according to the set current value I.

A control circuit 28 according to the present embodiment further includes a shift amount setting unit 284. The shift amount setting unit 284 sets the constant α based on the set current value I inputted from the control device 1 (a setting unit 13). The shift amount setting unit 284 sets the constant α to a value of at least 0 Hz and at most 30 Hz (e.g., 20 Hz) when the set current value I is less than 850 A, sets the constant α to a value of at least 0 Hz and at most 15 Hz (e.g., 10 Hz) when the set current value I is at least 850 A and less than 950 A, and sets the constant α to a value of at least 0 Hz and at most 5 Hz (e.g., 2.5 Hz) when the set current value I is at least 950 A.

In the present embodiment as well, a frequency setting unit 282 calculates a set frequency F of less than 50 Hz, based on the weld cross-sectional area A inputted from the control device 1 (the setting unit 13). The welding power supply device(s) 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A2 can increase the range of welding conditions under which favorable welding results can be obtained. In addition, according to the present embodiment, the welding system A2 has advantages similar to those of the welding system A1 owing to its common configuration with the welding system A1. Furthermore, according to the present embodiment, the shift amount setting unit 284 sets the constant α based on the set current value I. This allows the welding system A2 to set a shift amount more appropriately over the entire current range, which makes it possible to set the set frequency F more accurately.

### Third Embodiment:

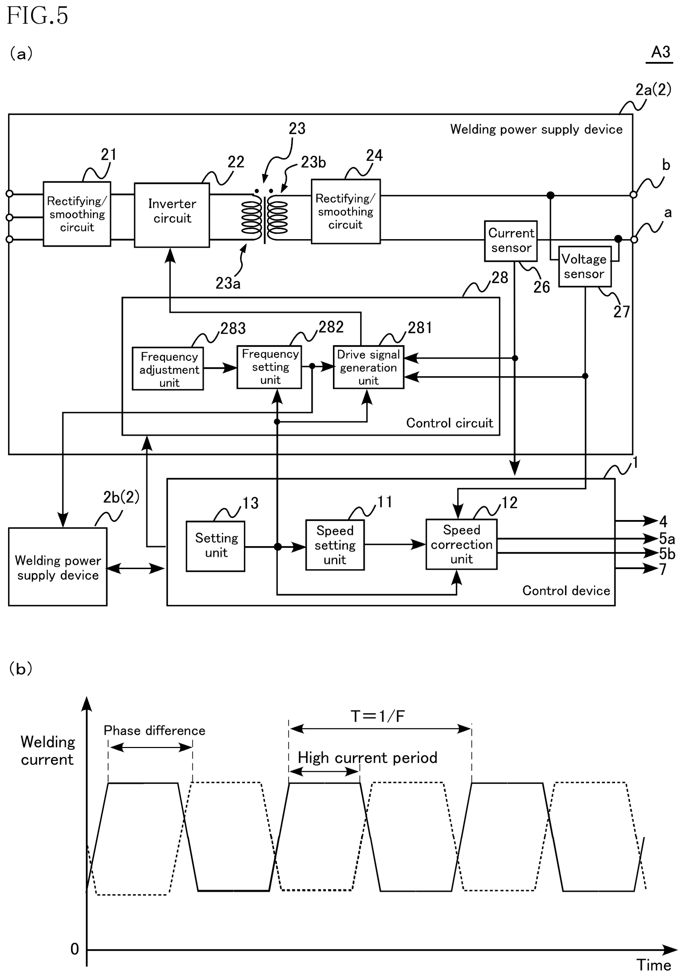

Fig. 5 is a diagram for describing a welding system A3 according to a third embodiment. Fig. 5(a) is a block diagram showing the internal configurations of a welding power supply device 2 and a control device 1 in the welding system A3. Fig. 5(b) is a waveform diagram showing an example of the output current of the welding power supply device 2. Note that in Fig. 5(a), the internal configuration of a welding power supply device 2b is omitted. In Fig. 5, elements that are the same as or similar to those in the first embodiment are denoted by the same reference numerals. The welding system A3 according to the present embodiment is different from the welding system A1 according to the first embodiment in outputting DC power instead of AC power.

The welding power supply device 2 according to the present embodiment does not include an inverter circuit 25. A drive signal generation unit 281 does not generate a polarity-switching drive signal. The welding power supply device 2 outputs DC power instead of AC power. As shown in Fig. 5(b), the welding power supply device 2 outputs a DC current having a trapezoidal waveform in which the current varies at the set frequency F. Note that the waveform of the DC current outputted by the welding power supply device 2 is not limited to a trapezoidal waveform. It may be a rectangular waveform in which a high current and a low current are alternately switched or may be any other waveform as long as the current varies at the set frequency F.

A frequency setting unit 282 according to the present embodiment sets the set frequency F, which is the frequency of the DC current outputted by the welding power supply device 2, to twice the set frequency calculated using the above formulas (4) to (6). In other words, the frequency setting unit 282 sets a frequency of less than 100 Hz as the set frequency F. In the case of alternating current, the polarity switches between positive and negative within one cycle. Thus, two high current periods are included in one cycle. In order to vary DC current in the same manner as AC current, it is necessary to set the frequency of the DC current to twice the frequency of the AC current. Further, as a method for setting the set frequency F more easily, the frequency setting unit 282 may set the set frequency F to at least 30 Hz and at most 60 Hz when the set current value I is 800 A or greater, and may set the set frequency F to at least 40 Hz and at most 80 Hz when the set current value I is less than 800 A. The coefficients K_{AA}, K_{SA}, K_{EA}, K_{PA}, K_{AB}, K_{SB}, K_{EB}, K_{PB}, K_{RB}, K_{DT}, and the constants K_{LA0}, K_{LB0} may be calculated by outputting DC current under the respective conditions and performing multiple regression analysis by using the actual welding results. In this case, the set frequency F can be calculated directly by using the above formulas (4) to (6) based on these coefficients and constants.

According to the present embodiment, the frequency setting unit 282 calculates a set frequency F of less than 100 Hz, based on the weld cross-sectional area A inputted from the control device 1 (a setting unit 13). The welding power supply device 2 varies the current by using the set frequency F and outputs the current. The current is varied with the set frequency F, which is relatively low, and outputted, thereby facilitating the discharge of the gas from the cavity and suppressing excessive expansion and contraction of the cavity. Accordingly, the welding system A3 can increase the range of welding conditions under which favorable welding results can be obtained. In addition, according to the present embodiment, the welding system A3 has advantages similar to those of the welding system A1 owing to its common configuration with the welding system A1. Further, according to the present embodiment, the welding power supply device 2 does not need to include an inverter circuit 25. Thus, the welding system A3 allows the welding power supply device 2 to be made smaller and lighter, and can also suppress the manufacturing cost.

Note that in the welding system A1 according to the first embodiment, the drive signal generation unit 281 can generate a signal that fixes a predetermined switching element in the inverter circuit 25 to be in the ON state and fixes the other switching elements to be in the OFF state, rather than generating the polarity-switching drive signal. This makes it possible for the welding system A1 to output DC power. Thus, the welding power supply device 2 in the welding system A1 may be configured to output DC power.

### Fourth Embodiment:

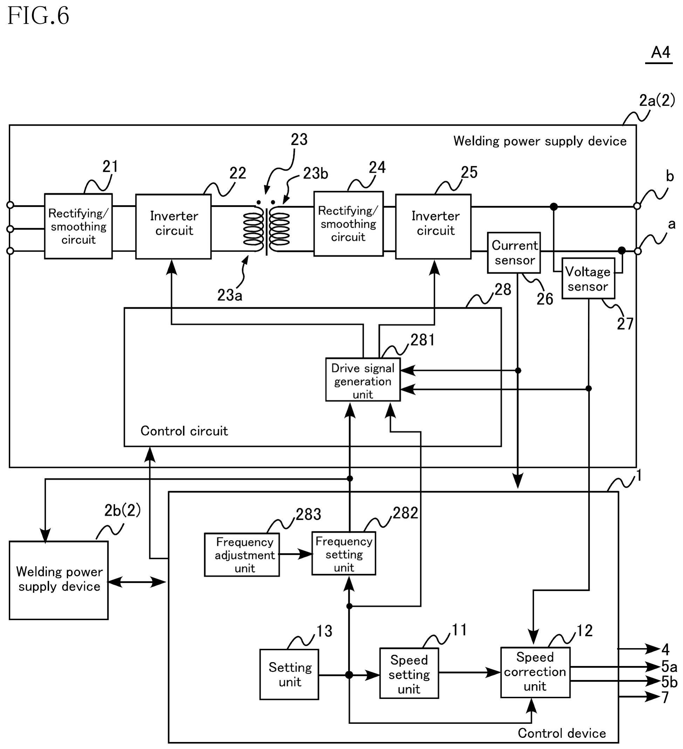

Fig. 6 is a diagram for describing a welding system A4 according to a fourth embodiment. Fig. 6 is a block diagram showing the internal configurations of one of the welding power supply devices 2 and a control device 1 in the welding system A4. In Fig. 6, the internal configuration of the welding power supply device 2b is omitted. In Fig. 6, elements that are the same as or similar to those in the first embodiment are denoted by the same reference numerals. The welding system A4 according to the present embodiment is different from the welding system A1 according to the first embodiment in that a frequency setting unit 282 is arranged in the control device 1.

In the present embodiment, a control circuit 28 does not include a frequency setting unit 282 or a frequency adjustment unit 283, but the control device 1 includes the frequency setting unit 282 and the frequency adjustment unit 283. Hence, in the welding system A4, the set frequency F is calculated by the control device 1 and outputted to the control circuit 28 in the welding power supply device 2.

In the present embodiment as well, the frequency setting unit 282 calculates a set frequency F of less than 50 Hz, based on the weld cross-sectional area A inputted from a setting unit 13. The welding power supply device 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A4 can increase the range of welding conditions under which favorable welding results can be obtained. In addition, according to the present embodiment, the welding system A4 has advantages similar to those of the welding system A1 owing to its common configuration with the welding system A1.

### Fifth Embodiment:

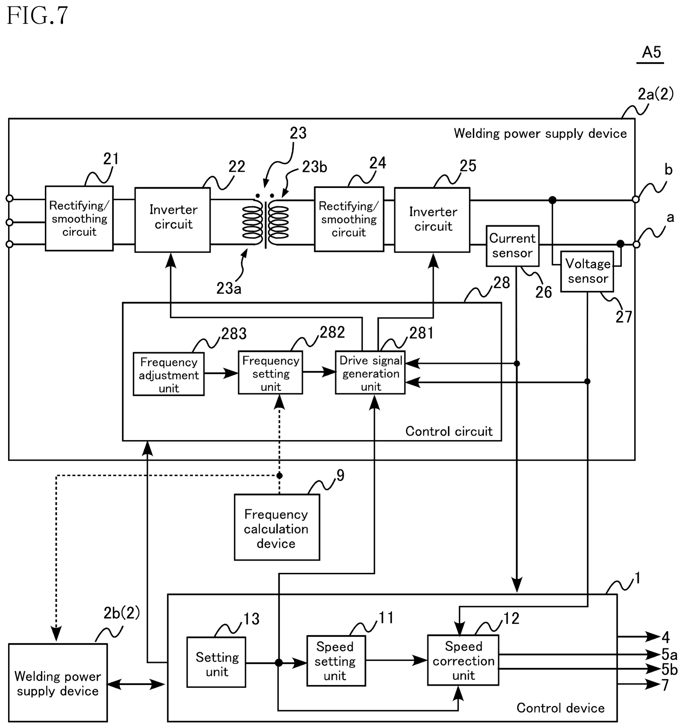

Fig. 7 is a diagram for describing a welding system A5 according to a fifth embodiment. Fig. 7 is a block diagram showing the internal configurations of one of the welding power supply devices 2 and a control device 1 in the welding system A5. In Fig. 7, the internal configuration of a welding power supply device 2b is omitted. In Fig. 7, elements that are the same as or similar to those in the first embodiment are denoted by the same reference numerals. The welding system A5 according to the present embodiment is different from the welding system A1 according to the first embodiment in that it is provided with a frequency calculation device 9 separately from the welding power supply device 2 and the control device 1.

In the present embodiment, the welding system A5 further includes the frequency calculation device 9. The frequency calculation device 9 is a general-purpose computer, for example, on which software is installed for calculating the set frequency F in the same manner as the frequency setting unit 282 according to the first embodiment. The software may be spreadsheet software for calculating the set frequency F. An operator operates a non-illustrated operation unit in the frequency calculation device 9 to input the weld cross-sectional area A, the welding speed S, the inter-electrode distance ED, the inter-electrode phase difference PD, the high current period ratio R, and the trailing electrode angle D_{T}. The frequency calculation device 9 calculates the set frequency F with use of the inputted information. The operator inputs the set frequency F calculated by the frequency calculation device 9 to a control circuit 28 in the welding power supply device 2. Note that each piece of information may be automatically acquired by the frequency calculation device 9 from the control device 1 (a setting unit 13). Further, the frequency calculation device 9 may output the calculated set frequency F automatically to the control circuit 28. The frequency setting unit 282 according to the present embodiment sets the set frequency F inputted by the operator or the frequency calculation device 9. In other words, in the welding system A5, the set frequency F is calculated by the frequency calculation device 9 and outputted to the control circuit 28 in the welding power supply device 2.

According to the present embodiment, the frequency calculation device 9 calculates a set frequency F of less than 50 Hz based on the weld cross-sectional area A. The welding power supply device 2 varies the current by using the set frequency F and outputs the current. The current is varied with a set frequency F lower than the commercial AC frequency and outputted, thereby facilitating the discharge of the gas from the cavity and suppressing excessive expansion and contraction of the cavity. Accordingly, the welding system A5 can increase the range of welding conditions under which favorable welding results can be obtained. In addition, according to the present embodiment, the welding system A5 has advantages similar to those of the welding system A1 owing to its common configuration with the welding system A1.

As can be understood from the fourth embodiment and the fifth embodiment, the configuration for calculating the set frequency F is not particularly limited. The set frequency F may be calculated at any location and by any method.

In the first to fifth embodiments, each of the welding power supply devices 2a and 2b outputs a periodically varying current. However, the present disclosure is not limited to this. One of the welding power supply devices 2a and 2b may not change the output current periodically. In this case, the frequency setting unit 282 calculates the set frequency F with the inter-electrode phase difference PD set to "0°" (no phase difference). Further, when the welding power supply device 2b varies the output current periodically and the welding power supply device 2a does not change the output current periodically, the frequency setting unit 282 calculates the set frequency F by using the high current period ratio R of the welding power supply device 2b.

### Sixth Embodiment:

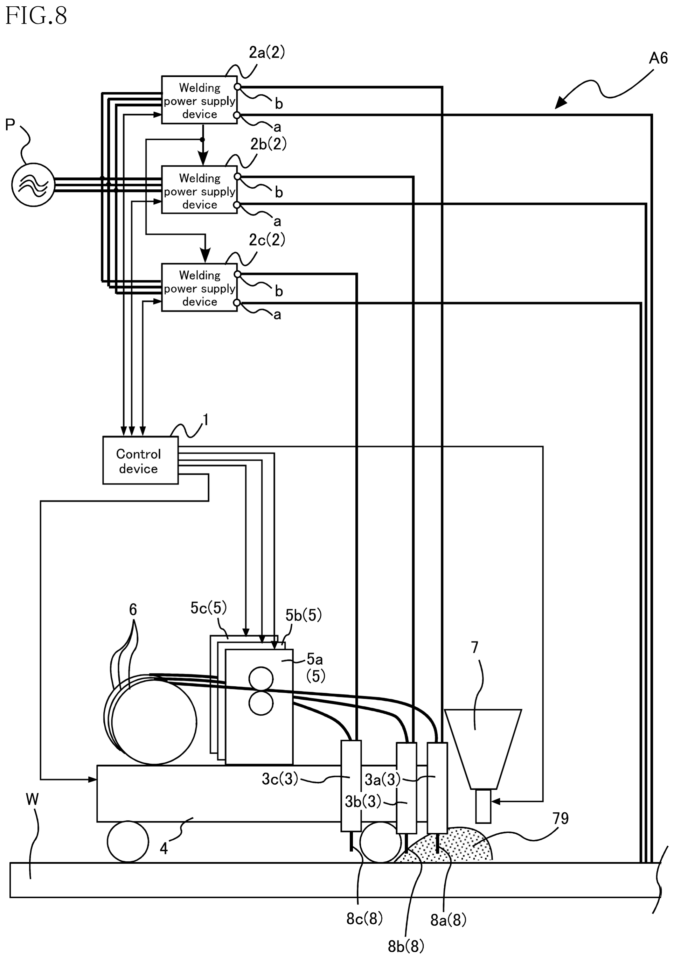

Fig. 8 is a diagram for describing a welding system A6 according to a sixth embodiment. Fig. 8 is a block diagram showing the overall configuration of the welding system A6. In Fig. 8, elements that are the same as or similar to those in the first embodiment are denoted by the same reference numerals. The welding system A6 according to the present embodiment is different from the welding system A1 according to the first embodiment in including three electrodes 8.

In the present embodiment, the welding system A6 includes three welding power supply devices 2, three welding torches 3, three wire feeders 5, three wire reels 6, and three electrodes 8. The welding system A6 is configured by further adding a welding power supply device 2c, a welding torch 3c, a wire feeder 5c, a wire reel 6, and an electrode 8c to the welding system A1. The welding torch 3c is arranged in line with the welding torches 3a and 3b in the traveling direction of a carriage 4, and is spaced apart from the welding torch 3b by a certain distance. The wire feeder 5c feeds a welding wire to the welding torch 3c. The tip of the welding wire fed by the wire feeder 5c forms the electrode 8c, which protrudes from the tip of the welding torch 3c. The distance between the electrode 8c and the electrode 8b is greater than the distance between the electrode 8a and the electrode 8b. The welding power supply device 2c supplies power to the electrode 8c. The welding power supply device 2c has the same configuration as the welding power supply device 2b.

In the present embodiment, a frequency setting unit 282 of a control circuit 28 in a welding power supply device 2a sets the set frequency F, as in the welding system A1 according to the first embodiment. Specifically, the frequency setting unit 282 calculates the set frequency F based on the electrodes 8a and 8b, which have a smaller inter-electrode distance. Thus, in the present embodiment, the weld cross-sectional area A relates to the weld metal deposited by both the electrodes 8a and 8b, but not to the weld metal deposited by the electrode 8c. A control circuit 28 of the welding power supply device 2b uses the set frequency F set and inputted by the frequency setting unit 282 of the welding power supply device 2a. In the present embodiment, a control circuit 28 of the welding power supply device 2c does not include a frequency setting unit 282 or a frequency adjustment unit 283, as with the control circuit 28 of the welding power supply device 2b. The control circuit 28 of the welding power supply device 2c uses the set frequency F set and inputted by the frequency setting unit 282 of the welding power supply device 2a.

According to the present embodiment, the frequency setting unit 282 calculates a set frequency F of less than 50 Hz, based on the weld cross-sectional area A inputted from a control device 1 (a setting unit 13). The welding power supply devices 2 vary the current by using the set frequency F and output the modified current. The current is varied with a set frequency F lower than the commercial AC frequency to be outputted, thereby facilitating the discharge of the gas from the cavity and suppressing excessive expansion and contraction of the cavity. Accordingly, the welding system A6 can increase the range of welding conditions under which favorable welding results can be obtained. In addition, according to the present embodiment, the welding system A6 has advantages similar to those of the welding system A1 owing to its common configuration with the welding system A1.

In the present embodiment, the control circuit 28 of the welding power supply device 2c uses the set frequency F set by the frequency setting unit 282 of the welding power supply device 2a. However, the present disclosure is not limited to this. The control circuit 28 of the welding power supply device 2c may include a frequency setting unit 282 and a frequency adjustment unit 283, and may use a set frequency F' calculated by the frequency setting unit 282. In this case, the frequency setting unit 282 of the welding power supply device 2c calculates the set frequency F' as follows.

The frequency setting unit 282 calculates the set frequency F', based on the following formulas (7) to (9), by using the set current value I, the set voltage value V, the wire diameter D of a welding wire used, the welding speed S, the weld cross-sectional area A, and the high current period ratio R that are inputted by the control device 1 (the setting unit 13). The above parameters are parameters for the electrode 8c (the welding power supply device 2c). K_{IA}, K_{VA}, K_{DA}, K_{SA}, K_{LA0}, K_{RB}, K_{IB}, K_{VB}, K_{DB}, K_{SB}, K_{AB}, K_{LB0}, and α are predetermined coefficients or constants. α is a value of zero or greater. ${L}_{A} = {K}_{IA} ⋅ I + {K}_{VA} ⋅ V + {K}_{DA} ⋅ D + {K}_{SA} ⋅ S + {K}_{LA 0}$ (7) ${L}_{B} = {K}_{RB} ⋅ R + {K}_{IB} ⋅ I + {K}_{VB} ⋅ V + {K}_{DB} ⋅ D + {K}_{SB} ⋅ S + {K}_{AB} ⋅ A + {L}_{LB 0}$ (8) $F ′ = MAX \left({L}_{A}, {L}_{B}\right) + α$ (9)

### Seventh Embodiment:

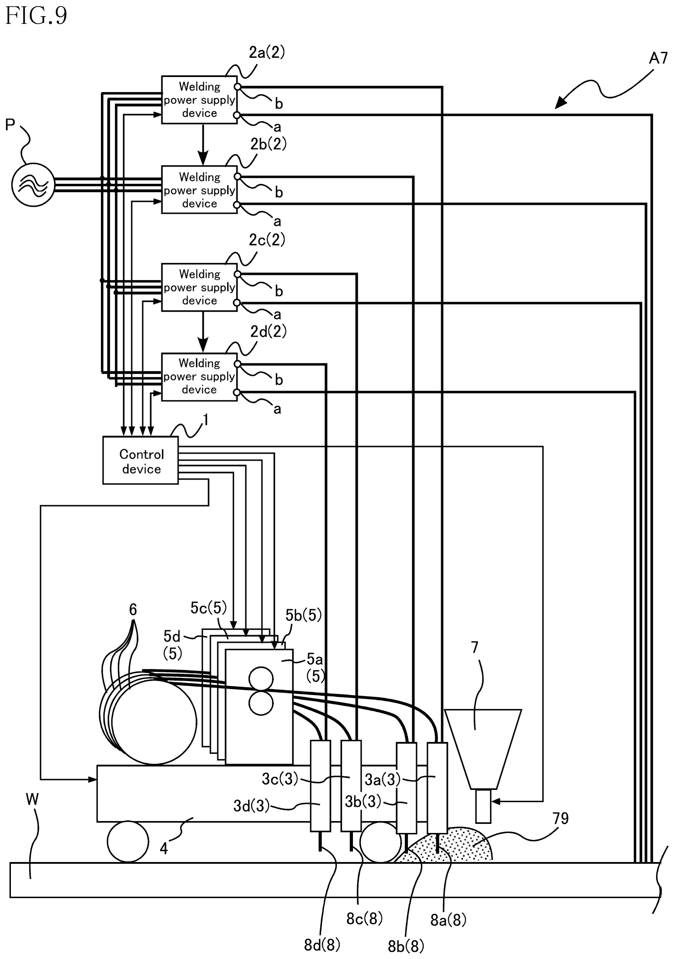

Fig. 9 is a diagram for describing a welding system A7 according to a seventh embodiment. Fig. 9 is a block diagram showing the overall configuration of the welding system A7. In Fig. 9, elements that are the same as or similar to those in the first embodiment are denoted by the same reference numerals. The welding system A7 according to the present embodiment is different from the welding system A1 according to the first embodiment in including four electrodes 8.

In the present embodiment, the welding system A7 includes four welding power supply devices 2, four welding torches 3, four wire feeders 5, four wire reels 6, and four electrodes 8. The welding system A7 is configured by further adding welding power supply devices 2c and 2d, welding torches 3c and 3d, wire feeders 5c and 5d, two wire reels 6, and electrodes 8c and 8d to the welding system A1. The welding torch 3c and 3d are arranged in line with the welding torches 3a and 3b in the traveling direction of a carriage 4, and are spaced apart from the welding torch 3b by certain distances. The welding torches 3c and 3d are arranged adjacent to (or next to) each other. The wire feeder 5c feeds a welding wire to the welding torch 3c. The tip of the welding wire fed by the wire feeder 5c forms the electrode 8c, which protrudes from the tip of the welding torch 3c. The wire feeder 5d feeds a welding wire to the welding torch 3d. The tip of the welding wire fed by the wire feeder 5d forms the electrode 8d, which protrudes from the tip of the welding torch 3d. In the illustrated example, the distance between the electrode 8c and the electrode 8b is greater than the distance between the electrode 8a and the electrode 8b, and the distance between the electrode 8c and the electrode 8d. The welding power supply device 2c supplies power to the electrode 8c. The welding power supply device 2c has the same configuration as the welding power supply device 2a. The welding power supply device 2d supplies power to the electrode 8d. The welding power supply device 2d has the same configuration as the welding power supply device 2b.

In the present embodiment, a frequency setting unit 282 of a control circuit 28 in the welding power supply device 2a sets the set frequency F, as in the welding system A1 according to the first embodiment. Specifically, the frequency setting unit 282 calculates the set frequency F based on the electrodes 8a and 8b, which have a smaller inter-electrode distance. The weld cross-sectional area A relates to the weld metal deposited by both the electrodes 8a and 8b. A control circuit 28 of the welding power supply device 2b uses the set frequency F set and inputted by the frequency setting unit 282 of the welding power supply device 2a. In the present embodiment, a frequency setting unit 282 of a control circuit 28 of the welding power supply device 2c calculates a set frequency F" based on the electrodes 8c and 8d, which have a smaller inter-electrode distance. The weld cross-sectional area A relates to the weld metal deposited by both the electrodes 8c and 8d. A control circuit 28 of the welding power supply device 2d uses the set frequency F" set and inputted by a frequency setting unit 282 of the welding power supply device 2c.

According to the present embodiment, each of the frequency setting units 282 calculates a set frequency F or F" of less than 50 Hz, based on the weld cross-sectional area A inputted from a control device 1 (a setting unit 13). The welding power supply devices 2 vary the currents by using the set frequency F or F" and output the modified currents. The currents outputted are varied with the set frequency F or F" lower than the commercial AC frequency, thereby facilitating the discharge of the gas from the cavity and suppressing excessive expansion and contraction of the cavity. Accordingly, the welding system A7 can increase the range of welding conditions under which favorable welding results can be obtained. In addition, according to the present embodiment, the welding system A7 has advantages similar to those of the welding system A1 owing to its common configuration with the welding system A1.

Further, the present inventors have found through repeated experiments that setting each of the set frequency F and the inter-electrode phase difference PD to a fixed value within a predetermined range can increase the range of welding conditions under which favorable welding results can be obtained. Specifically, the inter-electrode phase difference PD is set to at least 135° and at most 180°, and the set frequency F is set to at least 15 Hz and at most 30 Hz (when the welding power supply devices 2 output AC power). This makes it possible to increase the maximum welding current, the maximum weld speed, or the maximum weld cross-sectional area in a wide range of welding conditions, as compared to those under conventionally employed conditions.

### Eighth Embodiment:

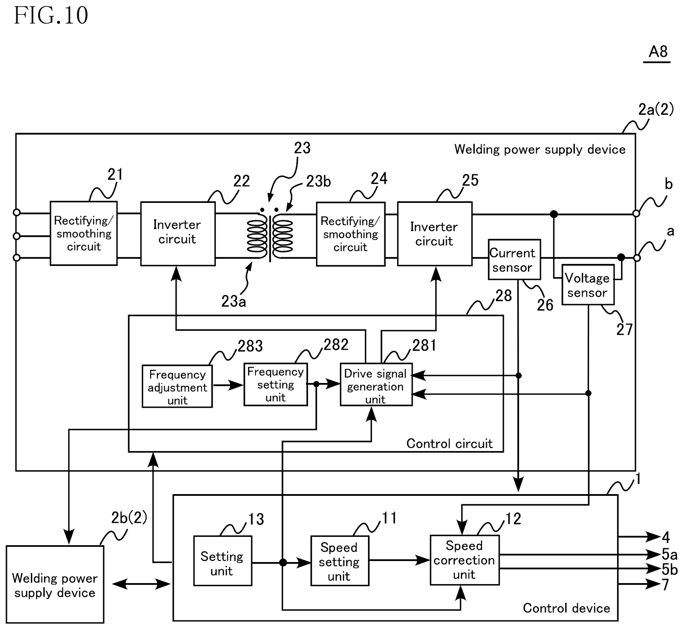

Fig. 10 is a diagram for describing a welding system A8 according to an eighth embodiment. Fig. 10 is a block diagram showing the internal configurations of a welding power supply device 2 and a control device 1 in the welding system A8. Note that in Fig. 10, the internal configuration of a welding power supply device 2b is omitted. In Fig. 10, elements that are the same as or similar to those in the first embodiment are denoted by the same reference numerals. The welding system A8 according to the present embodiment is different from the welding system A1 according to the first embodiment in that a frequency setting unit 282 sets the set frequency F regardless of the information set by the control device 1 (a setting unit 13).

The frequency setting unit 282 according to the present embodiment does not receive information from the setting unit 13, and outputs the set frequency F that is set in advance to a drive signal generation unit 281. The set frequency F set by the frequency setting unit 282 is at least 15 Hz and at most 30 Hz. In this frequency range, the maximum welding current, the maximum weld speed, or the maximum weld cross-sectional area can be increased in a wide range of welding conditions. Note that the set frequency F set by the frequency setting unit 282 is more preferably at least 15 Hz and at most 25 Hz. The setting unit 13 according to the present embodiment sets the inter-electrode phase difference PD in a range of at least 135° and at most 180°. When the inter-electrode phase difference PD is less than 135°, superiority in welding stability and bead appearance is not observed as compared to the conventionally used 120° inter-electrode phase difference. It is more preferable that the inter-electrode phase difference PD be at least 140° and at most 165°. In this range, the frequency of occurrence of minute short circuits is minimized over a wide range of welding conditions, thereby achieving a favorable bead appearance.

Without limitation, the welding speed S (travel speed of the carriage 4) is preferably 45 cm/min or less. When the welding speed S is greater than 45 cm/min, the maximum value of the weld cross-sectional area A becomes smaller. This reduces the advantage in welding with a large leg length or a large throat thickness. It is more preferable that the welding speed S be 40 cm/min or less. Without limitation, the flux 79 to be applied is preferably molten flux. When the flux 79 is bonded flux, the effect of improving the bead appearance is reduced within the range of conditions described above. Further, the flux 79 is more preferably a calcia-silica-based (e.g., CaO + MgO + SiO₂ ≥ 55%, and CaO + MgO ≥ 15%) molten flux, and even more preferably a manganese oxide-silica-based molten flux (e.g., MnO + SiO₂ ≥ 50%, and CaO ≤ 15%) molten flux. When the flux 79 is one of these fluxes, the maximum welding current, the maximum weld speed, or the maximum weld cross-sectional area can be significantly increased as compared to conventional conditions. Further, without limitation, the inter-electrode distance ED is preferably at least 10 mm and at most 25 mm, and more preferably at least 13 mm and at most 17 mm. Without limitation, the current waveform to be outputted is preferably a sinusoidal waveform.

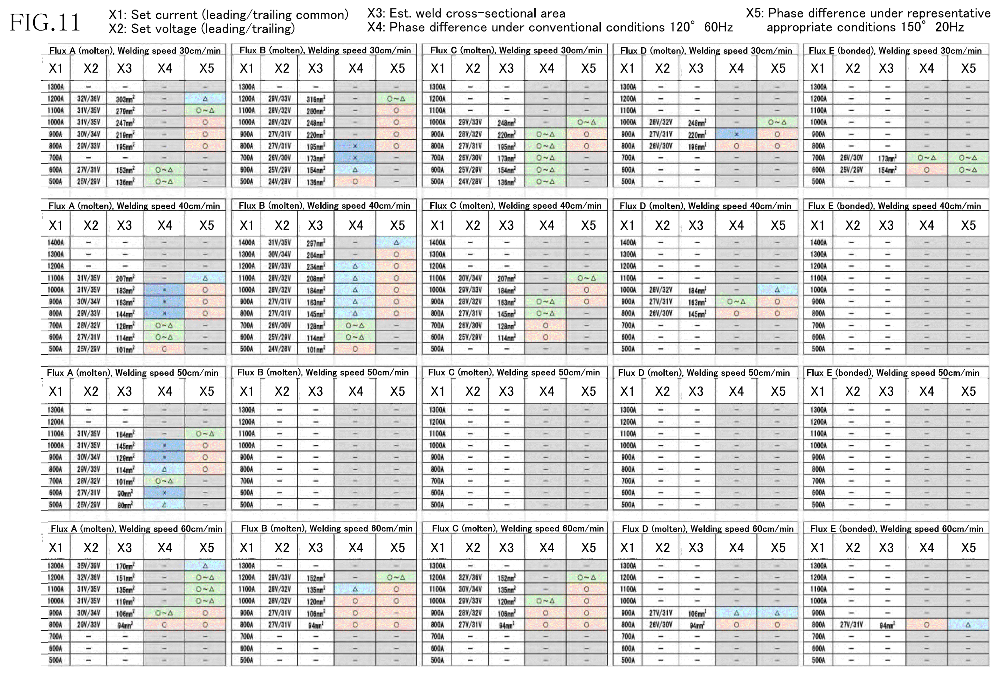

Fig. 11 shows a set of tables presenting the evaluation results of bead appearance when welding was performed under each set of conditions. Each table shows evaluation results under conventional conditions where the inter-electrode phase difference PD is 120° and the set frequency F is 60 Hz, and evaluation results under representative appropriate conditions where the inter-electrode phase difference PD is 150° and the set frequency F is 20 Hz. As in Fig. 3, "∘" indicates conditions where the bead appearance is satisfactory. "∘-△" indicates conditions where there are no localized bead irregularities but the bead width gradually varies to result in unevenness. "△" indicates conditions where the bead width is uneven, and "×" indicates conditions where a welding defect such as an undercut has occurred. Note that "-" indicates conditions where no evaluation was performed because the result can be inferred from the preceding or succeeding evaluation results. Note that the inter-electrode distance ED is set to 15 mm, the electrode angles are - 5° for the leading electrode and 10° for the trailing electrode; and the output current waveform is sinusoidal.

As shown in the tables in Fig. 11, under the representative appropriate conditions, the evaluation results of bead appearance are improved at higher set currents as compared to conventional conditions. Thus, the maximum weld cross-sectional area under the representative appropriate conditions in each table is larger than the maximum weld cross-sectional area under the conventional conditions. For example, when welding was performed with flux B at a welding speed of 30 cm/min, the maximum weld cross-sectional area was 136 mm² under the conventional conditions, whereas the maximum weld cross-sectional area increased to 280 mm² under the representative appropriate conditions. As such, highly efficient welding was achieved under the representative appropriate conditions as compared to the conventional conditions.

According to the present embodiment, the frequency setting unit 282 sets a set frequency F of at least 15 Hz and at most 30 Hz. The welding power supply devices 2 vary the current by using the set frequency F and output the current. The current is varied with a set frequency Flower than the commercial AC frequency and outputted, thereby facilitating the discharge of the gas from the cavity and suppressing excessive expansion and contraction of the cavity. Accordingly, the welding system A8 can increase the range of welding conditions under which favorable welding results can be obtained. According to the present embodiment, the setting unit 13 sets the inter-electrode phase difference PD in a range of at least 135° and at most 180°. As such, the welding system A8 can suppress the frequency of occurrence of minute short circuits in a wide range of welding conditions and achieve a favorable bead appearance. The welding system A8 can increase the maximum welding current, the maximum weld speed, or the maximum weld cross-sectional area in a wide range of welding conditions, as compared to those under conventionally employed conditions, by setting the inter-electrode phase difference PD to at least 135° and at most 180° and the set frequency F to at least 15 Hz and at most 30 Hz. The welding system A8 can set the inter-electrode phase difference PD and the set frequency F to fixed values within the above ranges. Thus, it is not necessary to adjust the inter-electrode phase difference PD or the set frequency F according to welding conditions, making the welding system A8 more versatile in use.

The present embodiment has been described with an example where the welding power supply devices 2 output AC power. However, when the welding power supply devices 2 output DC power as described in the third embodiment, the set frequency F set by the frequency setting unit 282 is twice the set frequency in the case of AC output. In other words, the set frequency F set by the frequency setting unit 282 is at least 30 Hz and at most 60 Hz, and is more preferably at least 30 Hz and at most 50 Hz.

The present embodiment has been described with an example where two electrodes 8 are provided. However, when three or more electrodes are provided as described in the sixth and seventh embodiments, the inter-electrode phase difference PD between any adjacent electrodes 8 may be set within the above range (at least 135° and at most 180°).

The multi-electrode submerged arc welding system and the multi-electrode submerged arc welding method according to the present disclosure are not limited to those in the above embodiments. Various design changes may be made to the specific configurations of the elements in the multi-electrode submerged arc welding system and the multi-electrode submerged arc welding method according to the present disclosure.

### REFERENCE NUMERALS

A1 to A8: Welding system 2, 2a, 2b: Welding power supply device 8, 8a, 8b: Electrode

## Claims

1. A multi-electrode submerged arc welding system comprising:
a first electrode and a second electrode;
a first welding power supply device that outputs a first output current to the first electrode, the first output current being an alternating current corresponding to a first set current value; and
a second welding power supply device that outputs a second output current to the second electrode, the second output current being an alternating current corresponding to a second set current value,
wherein the first welding power supply device or the second welding power supply device is configured to output, in place of the first output current or the second output current, a current having a set frequency of less than 50 Hz, the set frequency being set in accordance with the first set current value or a magnitude of the first output current.

2. The multi-electrode submerged arc welding system according to claim 1, wherein the set frequency is set to at least 15 Hz and at most 30 Hz when the first set current value or the magnitude of the first output current is 800 A or greater, and is set to at least 20 Hz and at most 40 Hz when the first set current value or the magnitude of the first output current is less than 800 A.

3. The multi-electrode submerged arc welding system according to claim 1, wherein the set frequency is set in accordance with a weld cross-sectional area.

4. The multi-electrode submerged arc welding system according to claim 3, wherein the set frequency varies in accordance with changes in a welding speed, an inter-electrode distance that is a separation distance between the first electrode and the second electrode, an inter-electrode phase difference that is an absolute value of a phase difference between the first output current and the second output current, a high current period ratio, and a trailing electrode angle.

5. The multi-electrode submerged arc welding system according to claim 4, wherein the set frequency is set to a value F calculated based on the following formulas (1) to (3) in which A represents the weld cross-sectional area, S represents the welding speed, ED represents the inter-electrode distance, PD represents the inter-electrode phase difference, R represents the high current period ratio, D_{T} represents the trailing electrode angle, and K_{AA}, K_{SA}, K_{EA}, K_{PA}, K_{LA0}, K_{AB}, K_{SB}, K_{EB}, K_{PB}, K_{RB}, K_{LB0}, K_{DT}, and α represent a predetermined coefficient or a constant: ${L}_{A} = {K}_{AA} ⋅ A + {K}_{SA} ⋅ S + {K}_{EA} ⋅ ED + {K}_{PA} ⋅ PD + {K}_{LA 0} ,$ (1) ${L}_{B} = {K}_{AB} ⋅ A + {K}_{SB} ⋅ S + {K}_{EB} ⋅ ED + {K}_{PB} ⋅ PD + {K}_{RB} ⋅ R + {L}_{LB 0} ,$ (2) $F = MAX \left({L}_{A}, {L}_{B}\right) + {K}_{DT} ⋅ {D}_{T} + α .$ (3)

6. The multi-electrode submerged arc welding system according to any one of claims 1 to 5, wherein the set frequency is adjustable by operator manipulation.

7. A multi-electrode submerged arc welding method for a multi-electrode submerged arc welding system that includes: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value,
the multi-electrode submerged arc welding method comprising:
calculating a set frequency of less than 100 Hz in accordance with the first set current value or a magnitude of the first output current; and
causing the first welding power supply device or the second welding power supply device to output, in place of the first output current or the second output current, a current having the set frequency.

8. A multi-electrode submerged arc welding system comprising:
a first electrode and a second electrode;
a first welding power supply device that outputs a first output current to the first electrode, the first output current being an alternating current corresponding to a first set current value; and
a second welding power supply device that outputs a second output current to the second electrode, the second output current being an alternating current corresponding to a second set current value,
wherein the first welding power supply device or the second welding power supply device is configured to output, in place of the first output current or the the second output current, a current having a set frequency of at least 15 Hz and at most 30 Hz, with the first set current value or a magnitude of the first output current being at least 800 A.

9. The multi-electrode submerged arc welding system according to claim 8, wherein an inter-electrode phase difference, which is an absolute value of a phase difference between the first output current and the second output current, is at least 135° and at most 180°.

10. The multi-electrode submerged arc welding system according to claim 9, wherein the inter-electrode phase difference is at least 140° and at most 165°.

11. The multi-electrode submerged arc welding system according to claim 10, wherein a welding speed is 45 cm/min or less.

12. The multi-electrode submerged arc welding system according to any one of claims 8 to 11, wherein the set frequency is adjustable by operator manipulation.

13. A multi-electrode submerged arc welding method for a multi-electrode submerged arc welding system that includes: a first electrode and a second electrode; a first welding power supply device that outputs a first output current to the first electrode, the first output current being an alternating current corresponding to a first set current value; and a second welding power supply device that outputs a second output current to the second electrode, the second output current being an alternating current corresponding to a second set current value,
the multi-electrode submerged arc welding method comprising:
causing the first set current value or a magnitude of the first output current to be at least 800 A;
causing an inter-electrode phase difference, which is an absolute value of a phase difference between the first output current and the second output current, to be at least 135° and at most 180°; and
causing the first welding power supply device or the second welding power supply device to output, in place of the first output current or the second output current, a current having a set frequency of at least 15 Hz and at most 30 Hz.

14. A multi-electrode submerged arc welding system comprising:
a first electrode and a second electrode;
a first welding power supply device that outputs a first output current to the first electrode, the first output current being a direct current corresponding to a first set current value; and
a second welding power supply device that outputs a second output current to the second electrode, the second output current being a direct current corresponding to a second set current value,
wherein the first welding power supply device or the second welding power supply device is configured to output, in place of the first output current or the second output current, a current having a set frequency of less than 100 Hz, the set frequency being set in accordance with the first set current value or a magnitude of the first output current.

15. The multi-electrode submerged arc welding system according to claim 14, wherein the set frequency is adjustable by operator manipulation.
